(19) **Europäisches Patentamt**

**European Patent Office**

**Office européen des brevets**

(11) **EP 1 161 360 B1**

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(21) Anmeldenummer: **00931069.9**

(22) Anmeldetag: **20.04.2000**

(51) Int Cl.⁷: **B60R 13/08**, B60R 13/01

(86) Internationale Anmeldenummer:
**PCT/EP00/03634**

(87) Internationale Veröffentlichungsnummer:
**WO 00/68039 (16.11.2000 Gazette 2000/46)**

(54) **SCHALLABSCHIRMELEMENT, VERWENDUNG DESSELBEN UND VERFAHREN ZU DESSEN HERSTELLUNG**

SOUND-SHIELDING ELEMENT, USE THEREOF AND METHOD FOR PRODUCING THE SAME

ELEMENT DE PROTECTION SONORE, SON UTILISATION ET SON PROCEDE DE REALISATION

(84) Benannte Vertragsstaaten:
**AT BE CH CY DE DK ES FI FR GB GR IE IT LI LU MC NL PT SE**

(30) Priorität: **06.05.1999 DE 19920969**
**09.07.1999 DE 19932175**
**02.09.1999 DE 29915428 U**
**02.09.1999 DE 29915429 U**

(43) Veröffentlichungstag der Anmeldung:
**12.12.2001 Patentblatt 2001/50**

(73) Patentinhaber: **FAIST Automotive GmbH & Co. KG**
**86381 Krumbach (DE)**

(72) Erfinder:
• **PFAFFELHUBER, Klaus**
**D-89312 Günzburg (DE)**
• **KRAUS, Günter**
**D-86676 Ehekirchen (DE)**
• **PATSOURAS, Dimitrios**
**D-85221 Dachau (DE)**

(74) Vertreter: **Müller, Hans-Jürgen**
**Maximilianstrasse 6**
**80539 München (DE)**

(56) Entgegenhaltungen:
EP-A- 0 341 652      WO-A-98/30375
DE-B- 1 180 155      DE-C- 4 315 759
DE-U- 9 116 233      US-A- 3 770 560
US-A- 4 256 797      US-A- 4 479 992
US-A- 4 904 510      US-A- 5 196 253

**Beschreibung**

Die Erfindung bezieht sich auf ein Schallabschirmelement zum Schutz vor Schallausbreitung aus dem Lärmbereich eines Raumes in einen Nachbarraum oder zum Abdecken von schallreflektierenden und/oder -erzeugenden Bauteilen mit mindestens einer viele kleine Durchbrechungen aufweisenden Platte oder Schicht sowie auf ein Herstellungsverfahren und auf Verwendungen derselben.

Ein solches Abschirmteil ist bereits bekannt (US-A-5 196 253, EP-A-0 341 652, DE-U-53 01 234 und DE-A-1 180 155). Die durch den KFZ-Motor oder durch Reifen, Luftströmungen und andere Lärm verursachende Aggregate entstehenden starken Geräusche werden beim Eindringen in den Fahrgastraum bzw. bei der Emission in die Umgebung durch solche sogenannte "Schallabsorber" gedämpft. Andere bekannte Schallabsorber weisen kammerförmige Innenräume auf, so daß die eindringenden Schallwellen durch Resonanzeffekte weitgehend gedämpft werden. Neben diesen Kammerabsorbern sind auch solche Schallabsorber bekannt, die aus porösen Materialien, wie Schäumen oder Vliesstoffen bestehen. Darüber hinaus sind auch sogenannte Schwingen angeregt wird, so daß hierdurch ein Energieverlust der Schallwelle stattfindet und diese gedämpft wird.

Ferner ist es bekannt (DE 43 15 759-C), im Abstand vor einer Schall reflektierenden Wand oder Decke eines großen Versammlungssaales eine transparente Glas- oder Kunststoffplatte einer Dicke zwischen 2 und 30 mm anzuordnen, welche mit kreisförmigen Löchern mit einem Durchmesser von 0,2 - 2 mm und einem gegenseitigen Lochabstand von 2 - 20 mm versehen ist. Der Wandabstand soll dabei zwischen 20 und 500 mm betragen. Für kleinere Räume und insbesondere in Kraftfahrzeugen sind solche Glas-Vorsatzschalen nicht ohne weiteres brauchbar. Schließlich sind auch theoretische Überlegungen über mikroperforierte Bauplatten vor einer schallharten Begrenzung (Maa: Theory and design of microperforated panel sound absorbing constructions, in Scientia Sinica 18 (1975), S. 55-71 (in chinesischer Sprache)) bekannt.

Der Erfindung liegt die Aufgabe zugrunde, ein Abschirmelement der eingangs genannten Gattung dahingehend zu verbessern, daß es bei einfacher Herstellbarkeit wenig Platz in Anspruch nimmt und an vielen Stellen z.B. im Kraftfahrzeug anbringbar ist bzw. übliche KFZ-Einbauteile ersetzt oder an diesen ohne großen Raumverlust anbringbar ist. Das Abschirmelement sollte aber nicht nur als Einbauteil in Kraftfahrzeugen, sondern auch für andere Zwecke verwendbar sein.

Die Erfindung ist in den Ansprüchen 1 und 2 gekennzeichnet. Dabei weist das Schallabschirmelement mindestens eine Platte bzw. Schicht einer Schichtdicke zwischen 0,01 und 50 mm, insbesondere zwischen 0,05 und 4 mm auf. Deren Durchbrechungen haben einen mittleren Durchmesser bzw. einer mittleren Breite zwischen 0,001 und 0,7 mm, insbesondere 0,01 und 0,7 mm, und einen Flächenanteil der Löcher bzw. Durchbrechungen, bezogen auf die Gesamtfläche des Einbauteils - auch "Lochflächenverhältnis" genannt - zwischen 0,001 und 5%, insbesondere zwischen 0,01 und 5 %, darunter z. B. 0,1 - 3 % .

Es ist auch an sich bereits bekannt, beispielsweise Sitze von Kraftfahrzeugen mit gelochtem Kunststoff oder Leder zu überziehen, um einen Luftaustausch zwischen dem hierdurch überspannten Sitz und dem Fahrgastraum zu ermöglichen. Dabei ist das Lochflächenverhältnis i.d.R. sehr viel größer als bei der vorliegenden Erfindung.

Bei der vorliegenden Erfindung kommt es auch nicht darauf an, die Schall reflektierenden KFZ-Fenster oder die Windschutzscheibe mit einer solchen perforierten Glas-Vorsatzwand wie bei dem Stand der Technik nach DE-B-43 15 759 zu versehen; dies würde nicht nur erheblichen Raum in Anspruch nehmen, sondern wäre beispielsweise im Fall von bewegbaren Fenstern völlig unpraktisch und im Falle von Windschutzscheiben wegen der sich dabei vor allem bei schrägem Lichteinfall ergebenden optischen Reflexionen unbrauchbar.

Gemäß einer Variante der Erfindung wird der betreffende Einbauteil beispielsweise des Kraftfahrzeugs selbst als "Schallabsorber" ausgebildet, ohne daß es erforderlich ist, eine zusätzliche perforierte Platte in größerem Abstand der Größenordnung von 10 cm vor diesen Einbauteil zu setzen.

Gemäß einer Variante der Erfindung können aber mehrere, insb. mehr als zwei perforierte bzw. gelochte Platten in einem Abstand voneinander hintereinander angeordnet sein, wodurch die Absorptionsbreitbandigkeit verbessert wird.

Es hat sich gezeigt, daß die Erfindung einfach herstellbar und montierbar ist, da das definierte Perforieren üblicher KFZ-Einbauteile gemäß der Erfindung regelmäßig keine großen Herstellungprobleme bereitet. Überraschenderweise wird eine verhältnismäßig große Breitbandigkeit in der Schallabsorption durch die Erfindung erzielt, die im Falle des Überzugs der dann als Träger dienenden gelochten Platte mit einer porösen Absorberschicht noch weiter verbessert werden kann.

Ein weiterer wesentlicher Vorteil der Erfindung besteht darin, daß für die gelochte Platte bzw. Schicht ein solches Material verwendet werden kann, das zusammen mit anderen KFZ-Einbauteilen leicht umweltfreundlich entsorgbar ist. Es sind zahlreiche Materialien verwendbar, um speziellen Anforderungen an Medien- und Hitzebeanspruchung, Schlagbeanspruchung und optimalen Eindruck zu genügen

Schließlich erweist sich eine derartig perforierte bzw. gelochte Platte bei geeigneter Dimensionierung der Löcher auch als wasserabweisend bei gleichzeitiger Dampfdurchlässigkeit ähnlich mikroporöser Textilien.

Besonders bevorzugte Materialien für die gelochte Platte bzw. Schicht sind:

Spritzgußmaterialien, wie Polypropylen und Polyamid, Folien, wie Polypropylen und ABS, Folien und Bänder aus Aluminium oder einer Aluminiumlegierung einer bevorzugten Schichtdicke von 0,5 mm, aber auch zu strukturierten Vliesen und Geweben verarbeitete Fasermaterialien aus Natur- und Kunstfasern, wie Baumwolle, Flachs, Hanf, Kokosfaser bzw. Polyester, Polypropylen etc. Diese Vliese können dabei natürlich auch durch eine Bindematrix aus z.B. Harzen oder Thermoplasten in ihrer Eigensteifigkeit und Formstabilität gesteigert werden. Für den Fall der Applikation einer porösen Abdeckschicht auf der gelochten Platte bzw. Schicht empfiehlt sich die Verwendung von geschäumtem Kunststoff, insbesondere Polyurethan und/oder von Vliesstoff aus insbesondere Baumwoll-Fasern.

Die Erfindung ist verwendbar für unterschiedliche Einbauteile in insb. KFZ, z.B. für Verkleidungen des Daches, das heißt als Dachhimmel, als Hutablage oder Türverkleidung, als Sonnenschutz oder Gepäckraum-Rollo, als spritzgegossene Abdeckeinheiten zum Abdecken bzw. Verkleiden von Kabeln oder Abgasrohren, auf der Unterbodenverkleidung oder Motorhaubenverkleidung, als Hitzeschutzschild von insb. Aluminiumblech sowie als Radhausschale bei insbesondere Kraftwagen.

Besonders vorteilhaft anwendbar ist die Erfindung bei Großraumfahrzeugen, wie Bussen und Luftfahrzeugen, bei denen es auf optimale Raumausnutzung ankommt, andererseits aber die Motorgeräusche im Passagierraum soweit wie möglich zu absorbieren sind.

Dabei ist es möglich, die Verkleidungsteile der Außenwand durch eine Mikroperformierung akustisch wirksam zu machen, ohne daß zusätzliche Absorptionsmaterialien zwischen Verkleidung und Außenkante eingebracht werden müssen.

Ferner hat sich gezeigt, daß die Herstellung einer mit insb. schmalen Schlitzen versehenen Schicht bzw. Platte, die jedenfalls im Bereich der Schlitze spanlos verworfen bzw. dreidimensional verformt ist, sowohl die Herstellung erleichtern hilft als auch die akustische Wirksamkeit hinsichtlich Schalldämpfung und Schalldämmung verbessert. Dabei sollte die Schlitzbreite insb. an den breitesten Stellen der Schlitze nur zwischen 0,02 und 0,18 mm und die Schlitzlänge zwischen 0,02 und 30 mm aufweisen.

Die Herstellung erfolgt zweckmäßigerweise dadurch, daß die Schicht bzw. Platte zuerst mit den als feine Schlitze bzw. Löcher ausgebildeten Durchbrechungen versehen wird, wozu Messerwalzen oder Messerbalken angewendet werden können. Dabei bzw. anschließend wird die Schicht oder Platte in einer oder auch in mehreren Richtungen so gezogen und gestreckt, daß sie sich nach Art von Streckmetall dreidimensional spanlos verwirft und eine unebene Oberfläche jedenfalls im Bereich um die Schlitze bildet.

Das spanlose Verwerfen kann auch dadurch erfolgen, daß die gelochte bzw. geschlitzte Schicht oder Platte erneut mit Verformungswalzen bearbeitet wird, die das dreidimensionale Verformen durchführen. Dabei können Schlitze bzw. Löcher teilweise wieder zugedrückt werden, so daß sich im Endprodukt die o.g. geringe Schlitzbreite zwischen nur 0,02 und 0,18 mm ergibt.

Es empfiehlt sich, Aluminium für die Schicht bzw. die Platte zu verwenden mit einer bevorzugten Schichtdicke von d = 0,5 mm.

Die Durchbrechungen sind bevorzugt dicht an dicht in der Schicht bzw. Platte angeordnet, wodurch sich ein siebartiger Charakter derselben ergibt.

Gemäß einer weiteren bevorzugten Ausbildung der Erfindung ist die zahlreiche Durchbrechungen aufweisende Schicht als selbsttragendes Schallschutzformteil ausgebildet, so daß keine zusätzlichen Schichten zur Bildung eines Mehrschichtenlaminats erforderlich sind. Der Begriff "Formteil" schließt hier dreidimensional verformte bzw. umgeformte Platten, dicke Schichten und dünne, als Folien ausgebildete Schichten ein, soweit sie die verformte Gestalt selbsttragend beibehalten, wenn keine zusätzliche Verformungsarbeit zum Weiterverformen aufgewendet wird. Das Formteil ist aber bevorzugt aus Kunststoff-Formmassen insbesondere durch Spritzgießen und -pressen hergestellt, kann aber auch durch beispielswiese Biegen, Tiefziehen und dergleichen Umformen von Halbzeugen hergestellt sein.

Dabei sind die Durchbrechungen so bemessen, daß sich für diese ein Lochflächenverhältnis zwischen 0,001 und 20 %, insbesondere zwischen 0,01 und 8 % ergibt. Die Formteildicke bzw. Plattendicke ist zwischen 0,01 und 50 mm, insbesondere zwischen 0,05 und 4 mm, bemessen und die mittlere Breite bzw. der mittlere Durchmesser der Durchbrechungen weist zwischen 0,001 und 2 mm, insbesondere zwischen 0,01 und 0,7 mm auf.

Es hat sich überraschenderweise gezeigt, daß ein solches erfindungsgemäßes Formteil keines weiteren Schichtenaufbaus bedarf, sondern selbst in den Träger bzw. mit dem Träger integriert ist, und dennoch eine gute Schallisolationsaufgabe erfüllt. Für abgehängte Gebäude-Unterdecken sind gelochte Metallpaneele mit 0,5 mm Dicke und einem Lochdurchmesser von 0,45 mm bei einem Lochflächenverhältnis von 0,64 % an sich schon bekannt.

Das Formteil kann mehrschichtig aufgebaut sein, aber auch nur aus einer einzigen Schicht bestehen; es ist insbesondere dreidimensional konfiguriert und selbsttragend und behält daher die gewünschte Konfiguration insbesondere als mindestens teilweise Abdeckung des Verbrennungsmotors bei.

Im Vergleich zu den "Minilöchern" der o. g. Durchbrechungen mit dem genannten Lochverhältnis kann das Formteil zusätzlich bevorzugt größere Durchbrechungen aufweisen, die zum Befestigen an Maschinenteilen, Fahrzeugteilen oder auch Wand- und Bodenteilen dienen.

Der Vorteil dieser Ausbildung der Erfindung besteht auch darin, daß man solche Formteile auch noch zusätzlich an denjenigen Stellen anbringen kann, an denen sich erst nachträglich zu große Schallausbreitung feststellen läßt, ohne daß der Grundaufbau wesentlich geändert werden kann.

Es hat sich überraschenderweise gezeigt, daß das erfindungsgemäße Schallschutzelement zusätzlich auch eine gute Wärmeisolationsaufgabe erfüllt, obwohl sogar gut wärmeleitfähige Materialien, wie Aluminium, bevorzugt werden. Dazu trägt überraschenderweise die sieb- bzw. rasterartige Anordnung der Durchbrechungen bei. Das Schallschutzelement dient dann gleichzeitig als Hitzeschutzelement. Es kann mehrschichtig aufgebaut sein, aber auch nur aus einer einzigen Schicht bestehen. Die Platte bzw. Schicht ist auch hier insbesondere dreidimensional verformt und kann hierdurch, da sie selbsttragend ist, bleibend in die gewünschte Konfiguration, insbesondere als mindestens teilweise Umhüllung eines Teils der Abgasanlage eines Verbrennungsmotors oder als mindestens teilweise Abdeckung eines Teils des Verbrennungsmotors selbst geformt werden. Im Vergleich zu den "Minilöchern" der o. g. Durchbrechungen mit dem genannten Lochverhältnis kann auch dieses Schall- und Hitzeschutzelement zusätzlich bevorzugt größere Durchbrechungen aufweisen, die zum Befestigen an Maschinenteilen, Fahrzeugteilen oder auch Wand- und Bodenteilen dienen. Sollen Befestigungsmittel, wie Schrauben, zusätzliche wärmeableitende Wirkungen ausüben, empfiehlt es sich, die Befestigung an wärmeleitfähigen Bauteilen vorzunehmen.

Besonders günstig hinsichtlich Herstellung und Wirksamkeit sind Hitzeschutzplatten aus Aluminium oder Aluminiumlegierungen mit schlitzartigen Durchbrechungen, die nach Art von "Streckmetall" durch Strecken spanlos verformt bzw. verworfen sind. Dabei genügen sogar Plattendicken zwischen 0,1 und 1 mm und sind Lochflächenverhältnisse zwischen 0,2 und 8 % günstig. Nach dem Verwerfen können solche "Streckmetalle" wieder glattgewalzt sein, wodurch sich sichelartige Durchbrechungen ergeben, deren Sichelform mit bloßem Auge kaum wahrnehmbar ist.

Ein Vorteil derartiger Schall- und Hitzeabschirmelemente besteht auch darin, daß man sie auch noch zusätzlich an denjenigen Stellen anbringen kann, an denen sich erst nachträglich zu hohe Hitzeentwicklung feststellen läßt, ohne daß der Grundaufbau wesentlich geändert werden kann.

Auch textile Gebilde können erfindungsgemäß ausgebildet und z.B. als Abschirmung auch gegen Sonnenstrahlen insbesondere in Form von Rollos, aber auch als Überzugs- oder Abdeckstoff verwendet werden. Die schalldämmende bzw. -dämpfende Wirkung ist auch günstig bei Rollos für Gepäckraumabdeckungen im Kfz. Dabei empfiehlt sich eine Tränkung des insbesondere aus Schußund Kettfäden bestehenden Gewebes mit thermoplastischem oder duroplastischem Kunststoff oder mit duroplastischen Harzen. Hierdurch wird die gelochte oder durch die Gewebestruktur mit der "Lochung" versehene Textilie versteift, sie kann aber dreidimensional verformt werden.

Anhand der Zeichnung werden Ausführungsbeispiele für die Erfindung im folgenden näher beschrieben. Dabei zeigen

Fig. 1          eine schematische Aufsicht auf ein Schall- und Hitzeschutzelement, das am Boden eines Kraftfahrzeugs in der Nähe der Auspuffanlage befestigt wird, um die im unmittelbaren Auspuffanlagenbereich entstehende Hitze und Schall gegenüber anderen Bauteilen des Kraftfahrzeugs abschirmen.

Fig. 2          eine Teilansicht eines Kfz-Einbauteils, bei dem das erfindungsgemäße Schallabschirmelement als Formteil hergestellt ist und zum Abdecken eines Teiles des Motors dient;

Fig. 3a         eine schematische Aufsicht auf ein erfindungsgemäßes Schallschutzelement, das als KFZ-Einbauteil ausgebildet ist, und

Fig. 3b         einen schematischen Querschnitt des in Fig. 3a gezeigten dreidimensional verformten Einbauteils;

Fig. 4          einen stark vergrößerten Teilausschnitt aus einem erfindungsgemäßen Schallschutzelement im Bereich einer kreisförmigen Durchbrechung;

Fig. 5          eine Draufsicht auf den Bereich des als KFZ-Einbauteil ausgebildeten Schallschutzelements rings um ein Loch mit kreisförmigem Querschnitt;

Fig. 6          einen stark vergrößerten schematischen Teilausschnitt aus einer Schall- und Hitzeschutzplatte gemäß der Erfindung und

Fig. 7          eine andere Ausbildung der Erfindung im Sinne von "Streckmetall";

Figuren 8 und 10    Teilaufsichten auf Abschirmelemente gemäß der Erfindung im vergrößerten Maßstab und

Figuren 9 und 11      entsprechende noch weiter vergrößerte Durchsichten durch die Abschirmelemente von Figuren 8 und 10;

Figuren 12 und 15      Beispiele für die Anordnung erfindungsgemäßer Schallabschirmelementen.

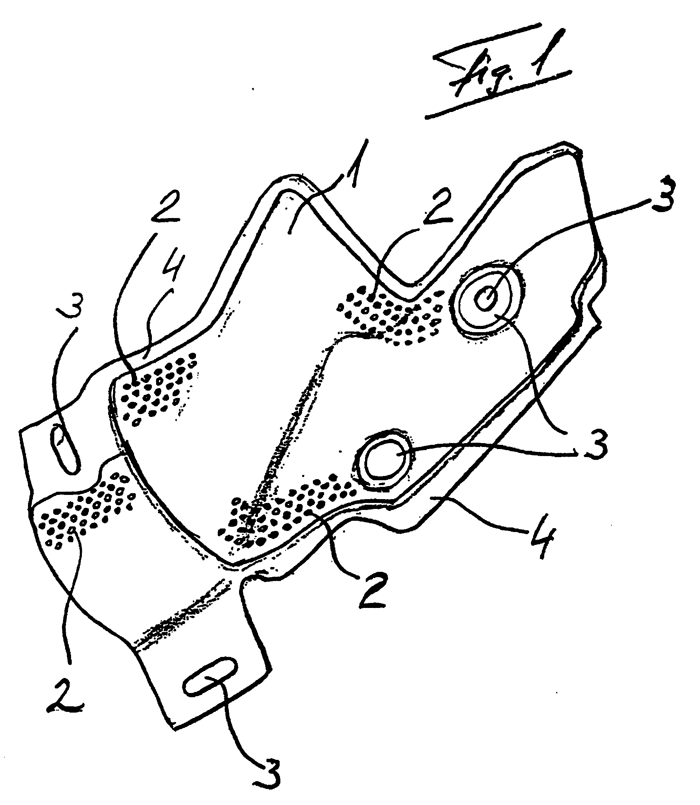

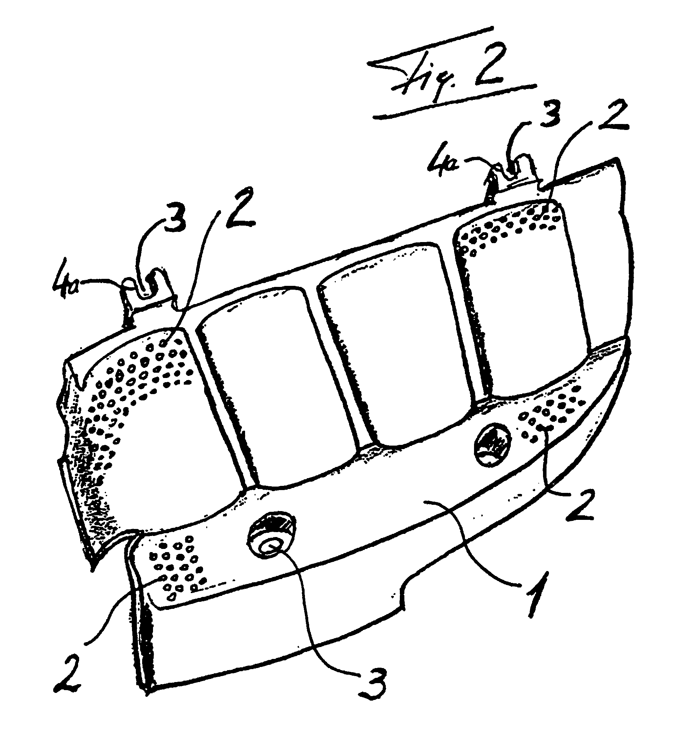

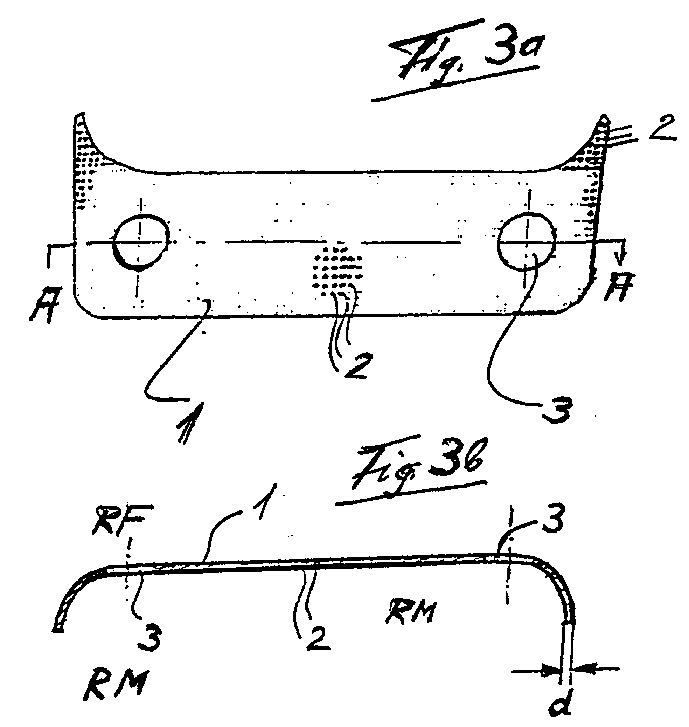

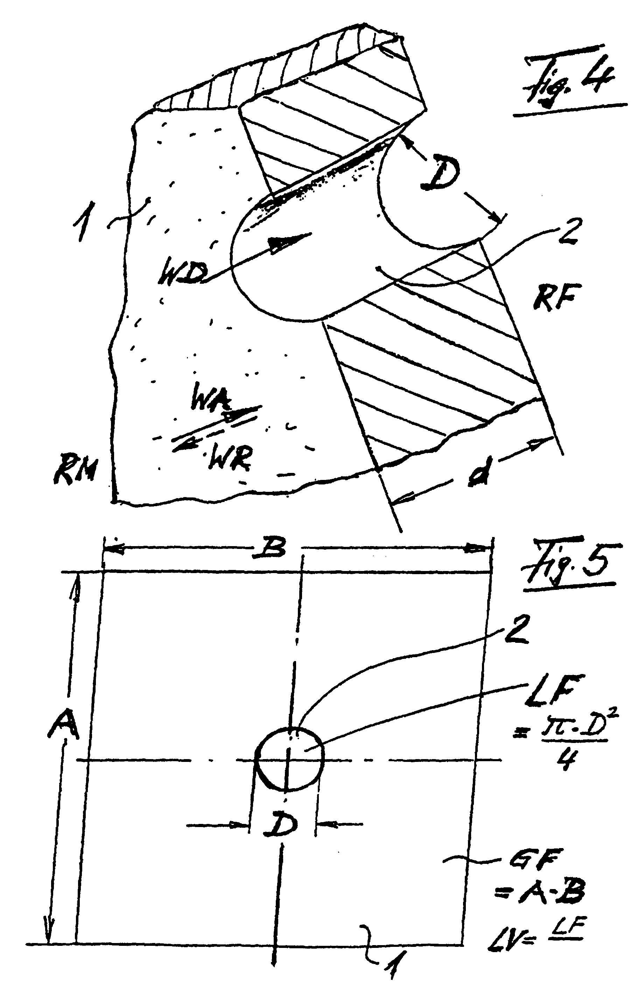

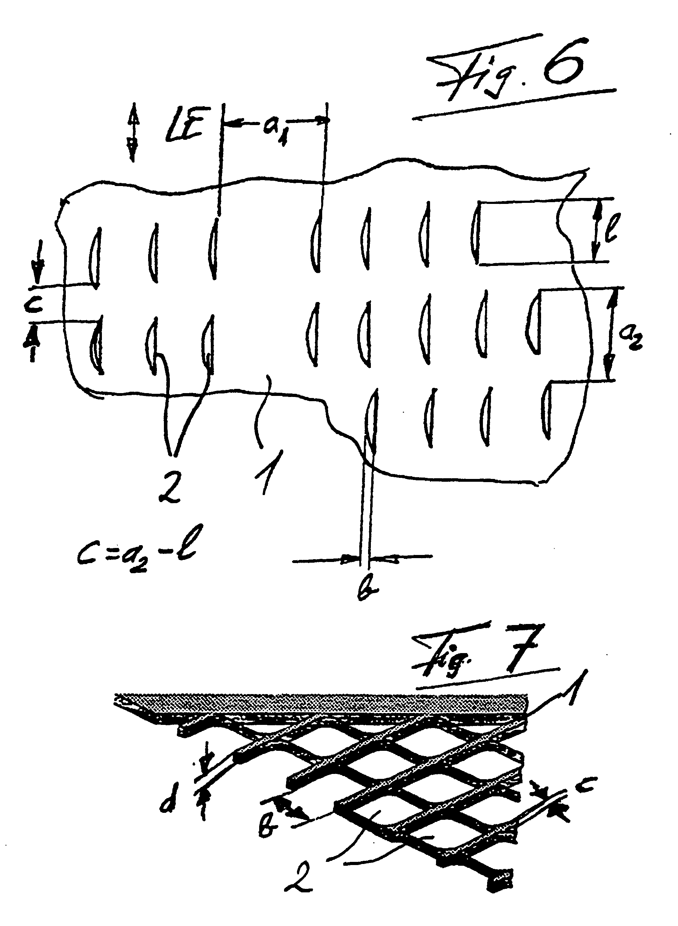

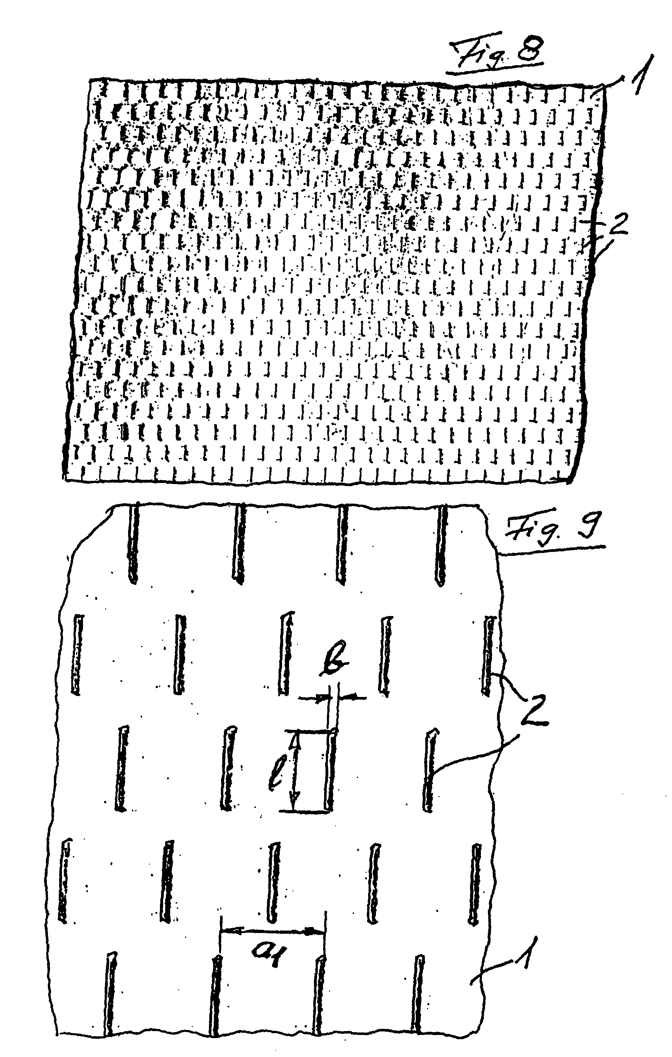

Die Schall- und Hitzeschutzplatte 1 von Fig. 1 mit einer Schichtdicke von d = 0,5 mm ist über fast die gesamte Fläche mit rasterartig angeordneten kleinen Durchbrechungen 2 gemäß der bei der Erfindung gewählten Dimensionierung versehen (in der Figur sind nur jeweils Teile der Lochungsbereiche gezeigt, selbst wenn die gesamte Platte 1 entsprechend "perforiert" ist). Die größeren Durchbrechungen 3 in Form von Langlöchern oder kreisförmigen Löchern dienen zum Befestigen am Boden des Kraftfahrzeugs, indem Schrauben durch die Durchbrechungen 3 gesteckt und die aus Aluminium bestehende Platte 1 dort unmittelbar gleichfalls an Metallteile festgeschraubt wird. Die Platte 1 ist dreidimensional gemäß den Bodenformationen und der Auspuffanlage mit dem Auspuffrohr verformt und weist außen einen umlaufenden Rand 4 auf. Die gesamte Platte 1 ist trotz ihrer geringen Plattendicke formstabil in dem Sinne, daß sie ihre Form beibehält, sofern sie nicht unter Anwendung von Kräften zwangsweise verformt wird.

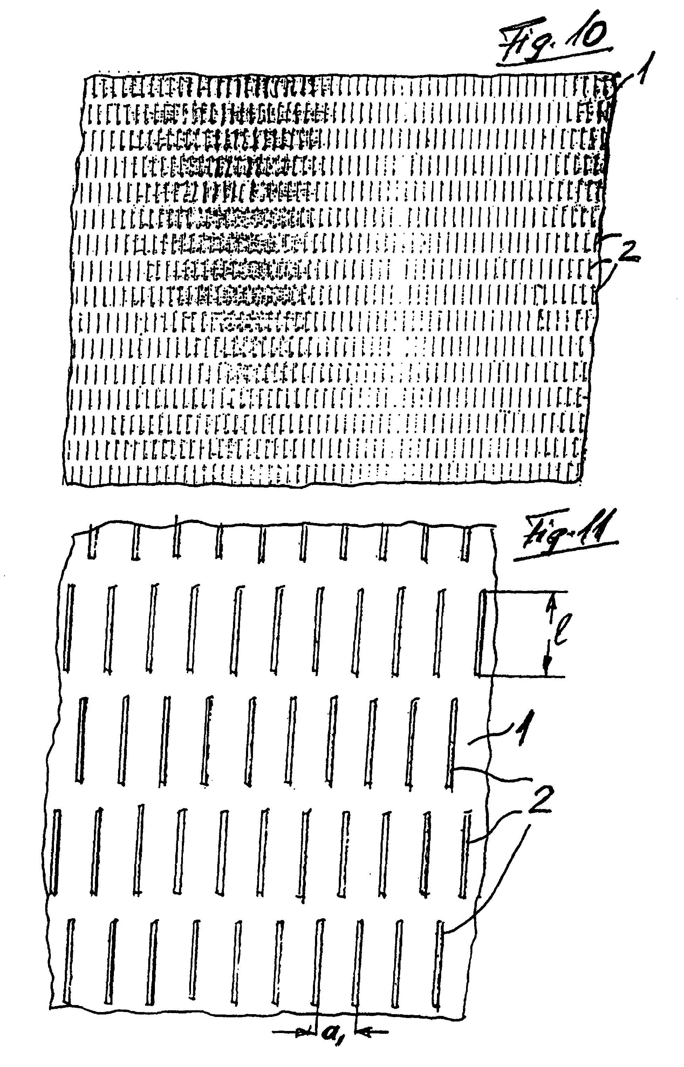

Das als Motorabdeckung dienende Schallschutzelement gemäß Fig. 2 ist als einstückiges Polypropylen-Spritzformteil mit einer Schichtdicke von d = 0,5 mm ausgebildet. Über fast die gesamte Fläche ist es gleichfalls erfindungsgemäß mit rasterartig angeordneten kleinen Durchbrechungen 2 versehen. Die größeren Durchbrechungen 3 oder Aussparungen dienen auch hier zum Befestigen am Chassis des Kraftfahrzeugs, indem Schrauben durch die Durchbrechungen 3 gesteckt und das Formteil festgeschraubt wird. Das Formteil stellt also eine Art dreidimensional geformte Platte 1 dar, ist gemäß den Formationen des Motorgehäuses geformt und weist außen Anschlußflansche 4a auf. Das gesamte Formteil ist trotz seiner geringen Plattendicke formstabil in dem Sinne, daß es seine Form beibehält. Die Durchbrechungen 2 dienen auch zum "Entdröhnen", da sie das Schwingverhalten des Formteils trotz der kleinen Abmessungen wesentlich verändern.

In Fig. 3a und 3b ist eine Platte 1 aus Polyamid gezeigt, welche dreidimensional verformt ist und ein Netz von als Löcher ausgebildeten Durchbrechungen 2 aufweist, die der Einfachheit halber nur an einer mittleren Stelle und an zwei oberen Endstellen in Fig. 3a gezeigt sind, aber die gesamte Oberfläche der Platte 1 regelmäßig in Linien und Zeilen angeordnet netzartig überziehen. Darüber hinaus weist die Platte 1 Aussparungen oder größere Durchbrechungen 3 auf, welche zum Hindurchstecken von Apparaturen des Kraftfahrzeugs dienen. Die Durchbrechungen 2 sind insbesondere im Querschnitt kreisförmig; sie erstrecken sich durch die gesamte Platte 1 zur anderen Seite insbesondere bis zum Fahrgastraum RF hindurch. Die Länge der Durchbrechungen 2 und daher auch die Dicke d der Platte 1 beträgt bei diesem Beispiel etwa 3 mm bei einem Lochdurchmesser von 0,12 mm.

Gemäß Fig. 4 weist die aus Polypropylen bestehende Platte 1 an einer bestimmten Stelle ein Loch als Durchbrechung 2 mit einem im wesentlichen kreisförmigen Querschnitt auf. Das Loch hat einen Durchmesser D von beispielsweise 0,5 mm. Die Länge L des Loches, die der Dicke d der Platte 1 entspricht, weist bei diesem Beispiel 3 mm auf. Es ergibt sich hier eine Lochfläche LF aus der Formel

$$LF = \frac{\pi \cdot D^2}{4}$$

von 0,20 mm$^2$ und ein Löchervolumen V von

$$V = LF \cdot d$$

von 0,6 mm$^3$ ergibt. Die auf die Lochplatte 1 auftreffenden akustischen Wellen WA werden größtenteils als Reflexionswellen WR an der Oberfläche der gelochten Platte 1 reflektiert, während ein anderer Anteil, nämlich die durchtretenden Wellen WD, in die Durchbrechung 2 eindringt und in dem dort befindlichen Gasvolumen physikalische Wirkungen initiiert, die zu einer sehr viel größeren Absorption der insgesamt einfallenden Wellen führen, als dies dem Lochflächenverhältnis LV entspricht. Das Lochflächenverhältnis LV ist das Verhältnis zwischen der von Durchbrechungen 2 eingenommenen Lochfläche LF in bezug auf die sowohl von Durchbrechungen 2 als auch von der übrigen Oberfläche der gelochten Platte 1 eingenommenen Gesamtfläche GF gemäß folgender Formel

$$LV = LF/GF$$

gemäß den Beziehungen, wie sie schematisch in Fig. 5 gezeigt sind.

Das als Einbauteil ausgebildete Schallschutzelement von Figur 6 besteht aus einer Platte 1 aus Aluminium mit einer Schichtdicke von d = 0,5 mm. Die Platte 1 ist mit einer Fülle von schlitzartigen Durchbrechungen 2 versehen, die eine Schlitzlänge 1 von insb. 1,6 mm und Schlitzbreite b (an der breitesten Stelle) von 0,09 bis 0,1 mm aufweisen. Der Abstand a1 nebeneinander angeordneter Durchbrechungen 2 beträgt etwa 1mm (berechnet von den sich entsprechenden Seiten der Schlitze) und der Abstand a2 einander entsprechender Enden benachbarter Schlitze beträgt etwa 2,5 mm, so daß sich ein effektiver Abstand c gemäß der Formel

$$c = a2 - 1$$

von 0,9 mm ergibt.

Figur 7 zeigt ein andere Ausbildung der Erfindung, die stärker den bisher für andere Zwecke verwendeten Streckmetallen entspricht. Dabei wird die Platte 1 mit einer Schichtdicke d von 0,5 mm zuerst mit Messerwalzen oder Messerbalken aufgeschlitzt. Dabei bzw. anschließend wird die Schicht 1 so gestreckt, daß sich die schmalen Schlitze zu etwa rautenförmigen Durchbrechungen 2 spreizen, wobei gleichzeitig ein spanloses Verwerfen der ursprünglich ebenen Oberfläche der Platte 1 erfolgt. Die Schlitzbreite b trägt bei dem fertigen Einbauteil gemäß Figur 7 etwa 1-2 mm bei einer sehr geringen Stegbreite c von etwa 0,03 mm, die dem Abstand benachbarter Durchbrechungen 2 entspricht.

Während das Lochflächenverhältnis bei der Ausbildungsform von Figur 6 zwischen etwa 5 und 6 % beträgt, ist dieses bei der anderen Ausbildung von Figur 7 im Bereich der Durchbrechungen 2 wesentlich größer, aber geringer als 20%.

Bei dem Ausführungsbeispiel von Figur 6 beträgt die Schlitzanzahl 1000/m über die Länge des Einbauteils und 400/m über die Breite bzw. Höhe des Einbauteils, also parallel zur Längserstreckung LE der schlitzförmigen Durchbrechungen 2. Bei einer anderen Version ähnlich Fig. 6 werden folgende Bemessungen gewählt:

$a_1$ = 1,4 mm
$a_2$ = 2 mm
b = 0,2 mm
1 = 0,9 mm.

Das erfindungsgemäße Einbauteil ist z.B. auch bei Gehäusen von Haushaltsgeräten, wie Staubsaugern und Haarföns verwendbar. Es empfiehlt sich dann allerdings die Anwendung der Spritzgießoder Tiefziehtechnik zur Formteilherstellung.

Wegen ihrer Biegesteife und ihres niedrigen Gewichts können sogenannte "Honey-Comb-Verbundplatten", d. h. wabenartige Konstruktionsteile, bevorzugt an beiden Seiten mit einem erfindungsgemäßen Schallabschirmelement abgedeckt werden, wodurch sich ein doppelseitiger "Mikroporabsorber" ergibt.

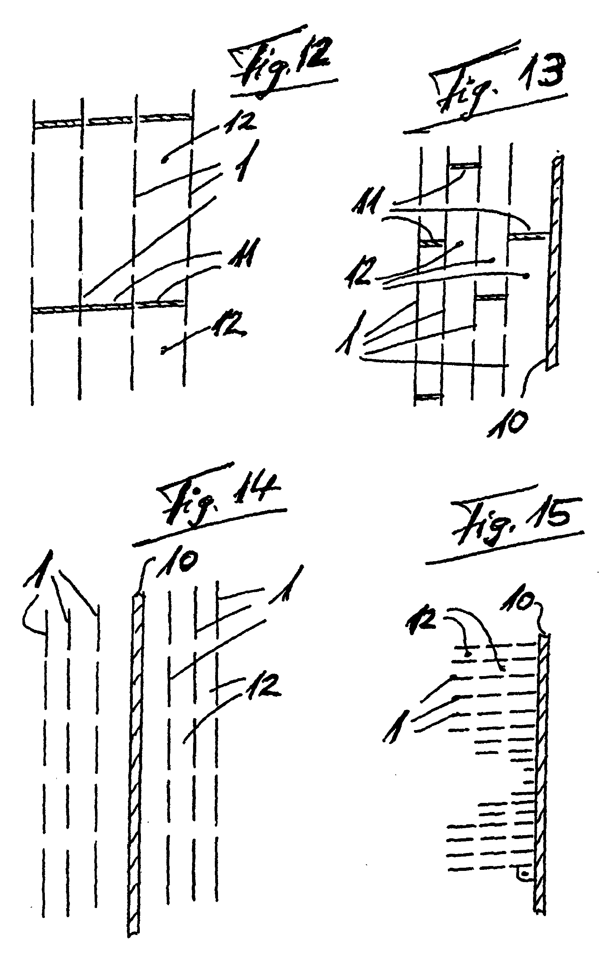

Figur 8 ist die vergrößerte Aufsicht auf einen Teil einer Ausbildung der Erfindung, bei der längliche schlitzartige Durchbrechungen 2 in benachbarten Reihen jeweils versetzt gezeigt sind. In Figur 9 ist eine noch weiter vergrößerte Darstellung der gleichen Ausbildung wie in Figur 8 gezeigt, bei der man beim Hindurchblicken gegen Licht die hier dargestellte Schlitzanordnung der länglichen Durchbrechungen 2 mit etwa 100 bis 150 µm Breite b und einer Länge l von ca. 2 mm sieht. Bei Draufsicht sind die Durchbrechungen 2 so wie in Figur 8 kaum als Licht hindurchlassende Durchbrechungen erkennbar, vielmehr besteht der Eindruck einer längliche Erhöhungen und Vertiefungen aufweisenden Struktur. Der Abstand $a_1$ beträgt mit etwa 1,2 l mehr als die Schlitzlänge l.

In Figuren 10 und 11 ist eine andere Ausbildung der Erfindung in entsprechender Aufsicht und Durchsicht mit dem Unterschied gezeigt, daß die Durchbrechungen 2 sehr wiel näher benachbart sind mit Abständen $a_1$ von weniger als der halben Schlitzlänge l der Durchbrechungen 2 und in diesem Beispiel mit etwa 0,45 l. Überraschenderweise wird hierdurch gegenüber der Ausbildung von Figur 8/9 eine breitbandigere Schallabsorption erreicht.

Gemäß Figur 12 sind mehrere Platten 1 bzw. Schichten zu einem mehrschichtigen Absorberelement verbunden. Dabei können mehrere einzelne Schichten oder Platten 1 durch die richtige Auswahl und unterschiedliche Bemessung der Perforierung der Platten zu einer gegenüber einer Einzelschicht nochmals deutlichen Steigerung der Breitbandigkeit führen. Vor allem im tiefen Frequenzbereich läßt sich hierdurch die Absorption weiter verbessern. Abstandhalter 11 halten die Einzelschichten unter Bildung von Luftschichten bzw. Zwischenräumen 12 in Abstand voneinander.

In Figur 13 ist die Anbringung eines aus vier Einzelschichten bzw. einzelnen Platten 1 bestehenden mehrschichtigen Absorberelements von einer Wand 10 schematisch im Querschnitt gezeigt. Auch hier sind Abstandhalter 11 verwendet.

Gemäß Figur 14 ist ein entsprechender mehrschichtiger Absorber auf beiden Seiten einer Lärmschutzwand 10 angebracht. Die Abstandhalter können auch als sogenannte "Kassetten", d.h. an vier Seiten durch Wände begrenzte und an den beiden Stirnseiten offene kastenartige Gebilde, ausgebildet sein.

Gemäß Figur 15 sind vor der Wand 10 und zwar rechtwinklig zu dieser die einzelnen Platten 1 unmittelbar an diese anschließend im Abstand voneinander und im rechten Winkel zur Wand 10 angeordnet. Die Bauteilanordnung kann nach Art eines "Regalsystems" aber auch nach Art eines "Wabensystems" mit insbesondere rechteckförmiger Wabenstruktur ausgebildet ein.

**Patentansprüche**

1.  Schallabschirmelement zum Schutz vor Schallausbreitung aus dem Lärmbereich eines Raumes in einen Nachbarraum mit mindestens einer viele kleine Durchbrechungen (2) aufweisenden Platte (1) oder Schicht einer Dicke (d) zwischen 0,01 und 50 mm
    **gekennzeichnet durch** folgende Dimensionierung:

    a. der mittlere Durchmesser (D) oder die Breite (b) der Durchbrechungen (2) beträgt zwischen 0,001 und 0,7 mm;
    b. das Lochflächenverhältnis (LV) beträgt zwischen 0,001 und 8%.

2.  Schallabschirmelement zum Abdecken von schallreflektierenden und/oder -erzeugenden Bauteilen mit mindestens einer viele kleine Durchbrechungen (2) aufweisenden Platte (1) oder Schicht einer Dicke (d) zwischen 0,01 und 50 mm **gekennzeichnet durch** folgende Dimensionierung:

    a. der mittlere Durchmesser (D) oder die Breite (b) der Durchbrechungen (2) beträgt zwischen 0,001 und 0,7 mm;
    b. das Lochflächenverhältnis (LV) beträgt zwischen 0,001 und 8%.

3.  Schallabschirmelement nach Anspruch 1 oder 2,
    **dadurch gekennzeichnet,**
    **daß** die Platte (l) eine Dicke (d) zwischen 0,05 und 4 mm, einen mittleren Durchmesser (D) bzw. eine mittlere Breite (b) zwischen 0,01 und 7 mm und ein Lochflächenverhältnis (LV) zwischen 0,01% und 5% aufweist.

4.  Schallabschirmelement nach einem der vorhergehenden Ansprüche,
    **dadurch gekennzeichnet,**
    **daß** die Platte (1) bzw. Schicht aus Polypropylen (PP) besteht.

5.  Schallabschirmelement nach einem der vorhergehenden Ansprüche,
    **dadurch gekennzeichnet,**
    **daß** Durchbrechungen (2) als schmale bzw. feine Schlitze mit einer Breite (b) zwischen 0,02 und 0,18 mm und mit einer Länge (l) zwischen 0,02 und 30 mm ausgebildet sind.

6.  Schallabschirmelement nach Anspruch 5,
    **dadurch gekennzeichnet,**
    **daß** die Schlitze eine Breite (b) zwischen 0,08 und 0,15 mm und eine Schlitzlänge (l) zwischen 0,8 und 2,2 mm aufweisen und in einem Abstand ($a_1$) quer zu ihrer Längserstreckung von weniger als der halben Schlitzlänge (l) voneinander versetzt angeordnet sind.

7.  Schallabschirmelement nach einem der vorhergehenden Ansprüche,
    **dadurch gekennzeichnet,**
    **daß** die Platte (1) als dreidimensional geformtes Formteil ausgebildet und aus Kunststoff spritzgegossen oder gepresst ist.

8.  Schallabschirmelement nach einem der Ansprüche 1 bis 6,
    **dadurch gekennzeichnet,**
    **daß** die Platte (1) oder Schicht spanlos durch Strecken dreidimensional verformt ist.

9.  Schallabschirmelement nach einem der Ansprüche 1 - 6,
    **dadurch gekennzeichnet,**
    **daß** die Platte (1) oder Schicht aus einer ebenen Platte, Platine, Band, Streifen oder Folie tiefgezogen ist.

**10.** Schallabschirmelement nach einem der Ansprüche 7 - 9,
**dadurch gekennzeichnet,**
**daß** das Formteil eine Dicke (d) zwischen 0,05 und 4 mm, insb. zwischen 0,2 und 1 mm aufweist.

**11.** Schallabschirmelement nach einem der vorhergehenden Ansprüche,
**dadurch gekennzeichnet,**
**daß** die Platte (1) oder Schicht siebartig bzw. rasterförmig mit Durchbrechungen (2) versehen ist.

**12.** Schallabschirmelement nach einem der vorhergehenden Ansprüche,
**dadurch gekennzeichnet,**
**daß** die Platte (1) oder Schicht aus Aluminium, Stahlblech, . Keramik oder hochtemperaturbeständigem Kunststoff besteht.

**13.** Schallabschirmelement nach einem der vorhergehenden Ansprüche,
**dadurch gekennzeichnet,**
**daß** die Platte (1) oder Schicht als Abdeckschicht einer schallabsorbierenden Schicht aus z.B. Vlies- oder Schaumstoff oder eines Kammer- oder Membranabsorbers verwendet ist und ein Lochflächenverhältnis von mindestens 3% und einen mittleren Durchmesser (D) zwischen 0,1 und 0,5 mm aufweist.

**14.** Verwendung des Schallabschirmelements nach einem der vorhergehenden Ansprüche **dadurch gekennzeichnet, daß** das Element als Schallabschirmelement wirksam ist.

**15.** Verwendung des Schallabschirmelements nach Anspruch 14 als spritzgegossenes Bedienelement.

**16.** Verwendung des Schallabschirmelements nach Anspruch 14 als Dachhimmel im Fahrgastraum von Kraftfahrzeugen.

**17.** Verwendung des Schallabschirmelements nach Anspruch 14 als Unterbodenverkleidung von Kraftfahrzeugen.

**18.** Verwendung des Schallabschirmelements nach Anspruch 14 als spritzgegossene Abdeckeinheit zur Abdeckung von Kabeln und dergleichen.

**19.** Verwendung des Schallabschirmelements nach Anspruch 14 als Radhausschale von Kraftfahrzeugen.

**20.** Verwendung des Schallabschirmelements nach Anspruch 14 als Hutablage in Kraftfahrzeugen.

**21.** Verwendung des Schallabschirmelements nach Anspruch 14 als Sitzüberzug in Kraftfahrzeugen.

**22.** Verwendung des Schallabschirmelements nach Anspruch 14 als Türverkleidung.

**23.** Verwendung des Schallabschirmelements nach Anspruch 14 als absorbierendes Rohr für das Absaugsystem, für das Belüftungssystem oder andere luftführende Rohre.

**24.** Verwendung des Schallabschirmelements nach Anspruch 14 als Radzierblende oder als Motorhaubenabdeckung von Kraftfahrzeugen.

**25.** Verwendung des Schallabschirmelements nach Anspruch 14 als mindestens teilweise Abdeckung eines Verbrennungsmotors.

**26.** Verwendung des Schallabschirmelements nach Anspruch 14 als Gepäckraumabdeckung z.B. in Form eines Rollos.

**27.** Verwendung des Schallabschirmelements nach Anspruch 14 als Hitzeschutzschild.

**28.** Verwendung des Schallabschirmelements nach Anspruch 14 als Abdeckschicht von Honey-Comb-Verbundplatten.

**29.** Verwendung des Schallabschirmelements nach Anspruch 14 im Verbund mit weiteren Platten (1), die unter sich jeweils im Abstand und im wesentlichen parallel zueinander angeordnet sind.

30. Verfahren zur Herstellung eines Schallabschirmelements nach einem der Ansprüche 1 bis 13,
**dadurch gekennzeichnet,**
**daß** die Platte (1) oder Schicht durch Verschmelzen oder Verkleben von Partikeln oder Fasern hergestellt wird, und die Durchbrechungen gemäß Anspruch 1 aufweist.

31. Verfahren zur Herstellung eines Schallabschirmelements nach einem der Ansprüche 1-13,
**dadurch gekennzeichnet,**
**daß** die gelochte Platte (1) oder Schicht durch Weben von aus Fasern gebildeten Fäden hergestellt wird, und die Durchbrechungen gemäß Anspruch 1 aufweist.

32. Verfahren zur Herstellung eines Schallabschirmelements nach einem der Ansprüche 1 bis 13,
**dadurch gekennzeichnet,**
**daß** ein textiles Gewebe mit thermoplastischem Material getränkt und in eine dreidimensionale Formgestalt verformt wird, und die Durchbrechungen gemäß Anspruch 1 aufweist.

33. Verfahren zur Herstellung eines Schallabschirmelements nach Anspruch 30
**dadurch gekennzeichnet,**
**daß** Durchbrechungen (2) der Platte (1) oder Schicht
durch elektrische Entladungen mittels Lichtbogens durch die Platte (1) bzw. Schicht hindurch hergestellt werden.

34. Verfahren zur Herstellung eines Schallabschirmelements nach Anspruch, 30
**dadurch gekennzeichnet,**
**daß** Durchbrechungen (2) der Platte (1) oder Schicht
durch Beschuß derselben mittels Teilchen hergestellt werden.

35. Verfahren zur Herstellung eines Schallabschirmelements nach Anspruch 30
**dadurch gekennzeichnet,**
**daß** Durchbrechungen (2) der Platte (1) oder Schicht mittels Nadel- oder Messerwalzen und/oder -platten hergestellt werden.

36. Verfahren nach Anspruch 35, **dadurch gekennzeichnet, daß** Verwerfungen der Durchbrechungen (2) der Platte (1) oder Schicht durch Verformungswalzen mindestens teilweise wieder zugedrückt werden.

**Claims**

1. Sound shielding element for protection from sound propagation out of the noise region of an enclosed space into a neighbouring space, comprising at least one plate (1) or layer having a thickness (d) between 0.01 and 50 mm and including a great number of perforations,
**characterised by** the following dimensioning:

    (a) the mean diameter (D) or the width (b) of said perforations (2) amounts to a value between 0.001 and 0.7 mm;
    (b) the perforation area ratio (LV) amounts to a value between 0.001 and 8 %.

2. Sound shielding element for covering sound-reflecting and/or sound-generating components, including at least one plate (1) or layer having a thickness (d) **be**tween 0.01 and 50 mm and including a great number of perforations (2),
**characterised by** the following dimensioning:

    (a) the mean diameter (D) or the width (b) of said perforations (2) amounts to a value between 0.001 and 0.7 mm;
    (b) the perforation area ratio (LV) amounts to a value between 0.001 and 8 %.

3. Sound shielding element according to Claim 1 or 2,
**characterised in**
**that** said plate (1) has a thickness (d) between 0.05 and 4 mm, a mean diameter (D) or a mean width (b), respectively, between 0.01 and 7 mm and a perforation area ratio (LV) between 0.01 % and 5 %.

**4.** Sound shielding element according to any of the preceding Claims,
**characterised in**
**that** said plate (1) or layer consists of polypropylene (PP).

**5.** Sound shielding element according to any of the preceding Claims,
**characterised in**
**that** perforations (2) are configured as narrow or fine slots having a width (b) between 0.02 and 0.18 mm and a length (I) between 0.02 and 30 mm.

**6.** Sound shielding element according to Claim 5,
**characterised in**
**that** said slots have a width (B) between 0.08 and 0.15 mm and a slot length (I) between 0.8 and 2.2 mm and are disposed at an offset at a spacing ($a_1$) from each other in a direction transverse to their longitudinal extension of less than half the slot length (I).

**7.** Sound shielding element according to any of the preceding Claims,
**characterised in**
**that** said plate (1) is configured as three-dimensional shaped part and is injection-moulded or pressed from a synthetic resin.

**8.** Sound shielding element according to any of the Claims 1 to 6,
**characterised in**
**that** said plate (1) or layer is three-dimensionally shaped by a non-cutting technique by stretching.

**9.** Sound shielding element according to any of the Claims 1 to 6,
**characterised in**
**that** said plate (1) or layer is deep-drawn from a plane plate, blank, tape, strip or sheet.

**10.** Sound shielding element according to any of the Claims 7 to 9,
**characterised in**
**that** the shaped part has a thickness (d) between 0.05 and 4 mm, particularly between 0.2 and 1 mm.

**11.** Sound shielding element according to any of the preceding Claims,
**characterised in**
**that** said plate (1) or layer is provided with perforations (2) in a sieve-like or raster-like manner.

**12.** Sound shielding element according to any of the preceding Claims,
**characterised in**
**that** said plate (1) or layer consists of aluminium, steel sheet, ceramic material or a synthetic resin resisting high temperatures.

**13.** Sound shielding element according to any of the preceding Claims,
**characterised in**
**that** said plate (1) or layer is used as covering layer of a sound-absorbing layer made of non-woven or foamed material, for instance, or of a chamber-type or membrane-type absorber and presents a perforation area ratio of at least 3 % and a mean diameter (D) between 0.1 and 0.5 mm.

**14.** Application of the sound shielding element according to any of the preceding Claims,
**characterised in**
**that** said element is used as sound shielding element.

**15.** Application of the sound shielding element according to Claim 14 as injection-moulded operating element.

**16.** Application of the sound shielding element according to Claim 14 as inside roof lining in the passenger compartment of motor vehicles.

**17.** Application of the sound shielding element according to Claim 14 as underbody lining of motor vehicles.

**18.** Application of the sound shielding element according to Claim 14 as injection-moulded covering unit for covering cables and the like.

**19.** Application of the sound shielding element according to Claim 14 as wheel case shell in motor vehicles.

**20.** Application of the sound shielding element according to Claim 14 as hat rack in motor vehicles.

**21.** Application of the sound shielding element according to Claim 14 as seat cover in motor vehicles.

**22.** Application of the sound shielding element according to Claim 14 as door panelling.

**23.** Application of the sound shielding element according to Claim 14 as absorbing tube for the exhaust system, for the ventilation system or other air-passing tubes.

**24.** Application of the sound shielding element according to Claim 14 as ornamental wheel cap or as engine bonnet cover in motor vehicles.

**25.** Application of the sound shielding element according to Claim 14 as at least partial covering of an internal combustion engine.

**26.** Application of the sound shielding element according to Claim 14 as luggage trunk cover, e.g. in the form of a blind.

**27.** Application of the sound shielding element according to Claim 14 as thermal guard shield.

**28.** Application of the sound shielding element according to Claim 14 as layer covering honey-comb compound plates.

**29.** Application of the sound shielding element according to Claim 14 in compound combination with further plates (1) which are disposed at a mutual spacing from each other and substantially in parallel with each other.

**30.** Method of manufacturing a sound shielding element according to any of the Claims 1 to 13,
**characterised in**
**that** said plate (1) or layer is produced by fusing or conglutination of particles or fibres while it is provided with perforations according to Claim 1.

**31.** Method of manufacturing a sound shielding element according to any of the Claims 1 to 13,
**characterised in**
**that** said perforated plate (1) or layer is produced by weaving threads formed of fibres while it is provided with perforations according to Claim 1.

**32.** Method of manufacturing a sound shielding element according to any of the Claims 1 to 13,
**characterised in**
**that** a textile tissue is impregnated with a thermoplastic material and shaped into a three-dimensional form while it is provided with perforations according to Claim 1.

**33.** Method of manufacturing a sound shielding element according to any of the Claims 1 to 13,
**characterised in**
**that** perforations (2) in said plate (1) or layer are produced by electrical discharge using an electric arc through said plate (1) or layer, respectively.

**34.** Method of manufacturing a sound shielding element according to any of the Claims 1 to 13,
**characterised in**
**that** perforations (2) in said plate (1) or layer are produced by bombarding the latter with particles.

**35.** Method of manufacturing a sound shielding element according to any of the Claims 1 to 13,
**characterised in**
**that** perforations (2) in said plate (1) or layer are produced by means of spiked rollers or cutter cylinders and/or plates.

**36.** Method according to Claim 35,
**characterised in**
**that** warping of said perforations (2) in said plate (1) or layer is closed, at least partly, by pressing them by means of shaping cylinders.

**Revendications**

**1.** Élément antisonique pour la protection contre la propagation du son en dehors de la zone de bruit d'un espace fermé dans un espace adjacent, comprenant au moins une plaque (1) ou couche ayant une épaisseur (d) entre 0,01 et 50 mm et présentant un grand nombre de perforations,
**caractérisé par** le dimensionnement suivant:

(a) le diamètre moyen (D) ou la largeur (B) desdites perforations (2) correspond à une valeur entre 0,001 et 0,7 mm;
(b) le rapport de l'aire des perforations (LV) correspond à une valeur entre 0,001 et 8 %.

**2.** Élément antisonique pour recouvrir des composants réflecteurs de son et/ou générateurs de son, comprenant au moins une plaque (1) ou couche ayant une épaisseur (d) entre 0,01 et 50 mm et présentant un grand nombre de perforations (2),
**caractérisé par** le dimensionnement suivant:

(a) le diamètre moyen (D) ou la largeur (B) desdites perforations (2) correspond à une valeur entre 0,001 et 0,7 mm;
(b) le rapport de l'aire des perforations (LV) correspond à une valeur entre 0,001 et 8 %.

**3.** Élément antisonique selon la revendication 1 ou 2,
**caractérisé en ce**
**que** ladite plaque (1) a une épaisseur (d) entre 0,05 et 4 mm, un diamètre moyen (D) ou respectivement une largeur moyenne (B) entre 0,01 et 7 mm, et un rapport de l'aire des perforations (LV) entre 0,01 % et 5 %.

**4.** Élément antisonique selon une quelconque des revendications précédentes,
**caractérisé en ce**
**que** ladite plaque (1) ou couche consiste en polypropylène (PP).

**5.** Élément antisonique selon une quelconque des revendications précédentes,
**caractérisé en ce**
**que** des perforations (2) sont configurées sous forme de fentes étroites ou fines à une largeur (b) are entre 0,02 et 0,18 mm et une longueur (I) entre 0,02 et 30 mm.

**6.** Élément antisonique selon la revendication 5,
**caractérisé en ce**
**que** lesdites fentes ont une largeur (B) entre 0,08 et 0,15 mm et une longueur de fente (I) entre 0,8 et 2,2 mm et sont disposées en déport à un écart ($a_1$) l'une de l'autre en une direction transversale à leur étendue longitudinale de moins de la moitié de la longueur de fente (I).

**7.** Élément antisonique selon une quelconque des revendications précédentes,
**caractérisé en ce**
**que** ladite plaque (1) est configurée sous forme d'un élément moulé à trois dimensions, en étant moulé par injection ou embouti à la presse d'une matière synthétique.

**8.** Élément antisonique selon une quelconque des revendications 1 à 6,
**caractérisé en ce**
**que** ladite plaque (1) ou couche est moulée par formage à trois dimensions par étirage.

**9.** Élément antisonique selon une quelconque des revendications 1 à 6,
**caractérisé en ce**
**que** ladite plaque (1) ou couche est emboutie d'une plaque plane, d'une platine, d'une bande ou d'une feuille.

**10.** , Élément antisonique selon une quelconque des revendications 7 à 9, **caractérisé en ce que** la pièce moulée a une épaisseur (d) entre 0,05 et 4 mm, en particulier entre 0,2 et 1 mm.

**11.** Élément antisonique selon une quelconque des revendications précédentes, **caractérisé en ce que** ladite plaque (1) ou couche est pourvue des perforations (2) de la façon d'un tamis ou d'un réseau.

**12.** Élément antisonique selon une quelconque des revendications précédentes, **caractérisé en ce que** ladite plaque (1) ou couche consiste en aluminium, en tôle d'acier, en un matériau céramique ou une matière synthétique à haute constance thermique.

**13.** Élément antisonique selon une quelconque des revendications précédentes, **caractérisé en ce que** ladite plaque (1) ou couche est utilisé en tant que couche de recouvrement d'une couche à absorption acoustique, qui est faite en un matériau non tissé ou alvéolaire, par exemple, ou d'un absorbeur acoustique à chambre ou à membrane, en présentant un rapport de l'aire des perforations d'au moins 3 % et un diamètre moyen (D) entre 0,1 et 0,5 mm.

**14.** Utilisation de l'élément antisonique selon une quelconque des revendications précédentes, **caractérisé en ce que** ledit élément est utilisé en tant que élément antisonique.

**15.** Utilisation de l'élément antisonique selon la revendication 14 en tant qu'un élément de commande moulé par injection.

**16.** Utilisation de l'élément antisonique selon la revendication 14 en tant qu'un élément d'habillage de plafond dans le compartiment des passagers de véhicules automobiles.

**17.** Utilisation de l'élément antisonique selon la revendication 14 en tant que recouvrement du bas de caisse de véhicules automobiles.

**18.** Utilisation de l'élément antisonique selon la revendication 14 en tant qu'une unité de recouvrement moulée par injection à recouvrir des câbles et éléments similaires.

**19.** Utilisation de l'élément antisonique selon la revendication 14 en tant que coque de recouvrement du carter de roue dans des véhicules automobiles.

**20.** , Utilisation de l'élément antisonique selon la revendication 14 en tant que porte-chapeaux dans des véhicules automobiles.

**21.** Utilisation de l'élément antisonique selon la revendication 14 en tant qu'un élément de recouvrement de sièges dans des véhicules automobiles.

**22.** Utilisation de l'élément antisonique selon la revendication 14 en tant que recouvrement de portes.

**23.** Utilisation de l'élément antisonique selon la revendication 14 en tant que tube absorbeur pour le système d'aspiration, pour le système de ventilation ou en tant de tout autre tube de passage de l'air.

**24.** Utilisation de l'élément antisonique selon la revendication 14 en tant qu'un élément enjoliveur ou en tant que recouvrement de capotage du moteur dans des véhicules automobiles.

**25.** Utilisation de l'élément antisonique selon la revendication 14 en tant qu'un élément de recouvrement, au moins en partie, d'un moteur à combustion interne.

**26.** Utilisation de l'élément antisonique selon la revendication 14 en tant qu'un élément de recouvrement du coffre à bagages, par exemple sous forme d'un store.

**27.** Utilisation de l'élément antisonique selon la revendication 14 en tant qu'un écran de protection thermique.

**28.** Utilisation de l'élément antisonique selon la revendication 14 en tant que couche de recouvrement des plaques composites à nids d'abeilles.

**29.** Utilisation de l'élément antisonique selon la revendication 14 en combinaison composite avec des autres plaques (1), qui sont disposées à un écart l'une de l'autre et essentiellement en parallèle l'une à l'autre.

**30.** Procédé de fabrication d'un élément antisonique selon une quelconque des revendications 1 à 13,
**caractérisé en ce**
**que** ladite plaque (1) ou couche est fabriquée par fusion ou collage des particules ou fibres, en étant pourvue de perforations selon la revendication 1.

**31.** Procédé de fabrication d'un élément antisonique selon une quelconque des revendications 1 à 13,
**caractérisé en ce**
**que** ladite plaque (1) ou couche perforée est fabriquée en tissant des fils formés par fibres, en étant pourvue des perforations selon la revendication 1.

**32.** Procédé de fabrication d'un élément antisonique selon une quelconque des revendications 1 à 13,
**caractérisé en ce**
**qu'**un tissu textile est imprégné d'une matière thermoplastique et moulé à trois dimensions, en étant pourvu des perforations selon la revendication 1.

**33.** Procédé de fabrication d'un élément antisonique selon une quelconque des revendications 1 à 13,
**caractérisé en ce**
**que** des perforations (2) dans ladite plaque (1) ou couche sont faites par décharge électrique moyennant un arc électrique à travers ladite plaque (1) ou respectivement couche.

**34.** Procédé de fabrication d'un élément antisonique selon une quelconque des revendications 1 à 13,
**caractérisé en ce**
**que** des perforations (2) dans ladite plaque (1) ou couche sont produites par bombardement de la dernière par des particules.

**35.** Procédé de fabrication d'un élément antisonique selon une quelconque des revendications 1 à 13,
**caractérisé en ce**
**que** des perforations (2) dans ladite plaque (1) ou couche sont produites moyennant des cylindres à aiguilles ou cylindres et/ou plaques à lames.

**36.** Procédé selon la revendication 35,
**caractérisé en ce**
**que** des gauchissements desdites perforations (2) dans ladite plaque (1) ou couche sont fermés, au moins en partie, par compression moyennant des cylindres de façonnage.

Fig. 1

Fig. 2

*Fig. 3a*

*Fig. 3b*

_Fig. 4_

1

2

$D$

WD

RF

WA

WR

RM

d

_Fig. 5_

2

$B$

$A$

$D$

$LF$

$= \dfrac{\pi \cdot D^2}{4}$

$GF$

$= A \cdot B$

$LV = \dfrac{LF}{}$

1

*Fig. 6*

$$c = a_2 - \ell$$

*Fig. 7*

Fig. 8

Fig. 9

Fig. 10

Fig. 11

*Fig. 12*

*Fig. 13*

*Fig. 14*

*Fig. 15*